# EUROPÄISCHE PATENTSCHRIFT

(11) **EP 2 120 527 B1**
(45) Veröffentlichungstag und Bekanntmachung des Hinweises auf die Patenterteilung: **21.09.2011**
(21) Anmeldenummer: 08707783.0
(22) Anmeldetag: 21.02.2008
(51) Int. Cl.: A01D 43/073

(54) **ANORDNUNG ZUM BEFÜLLEN EINES BEHÄLTERS MIT SCHÜTTGUT**
ARRANGEMENT FOR FILLING A CONTAINER WITH BULK MATERIAL
DISPOSITIF POUR REMPLIR UN RÉCIPIENT DE PRODUIT EN VRAC

(30) Priorität: 22.02.2007 DE 102007009666
(43) Veröffentlichungstag der Anmeldung: 25.11.2009
(73) Patentinhaber: Carl Zeiss MicroImaging GmbH, 07745 Jena (DE)
(72) Erfinder: CORRENS, Nico, 99425 Weimar (DE); NIETEN, Christoph, 07743 Jena (DE); RODE, Michael, 07743 Jena (DE)
(74) Vertreter: Loritz, Rainer
(86) Internationale Anmeldenummer: PCT/EP2008/001351
(87) Internationale Veröffentlichungsnummer: WO 2008/101694

(56) Entgegenhaltungen:
- EP-A- 0 666 018
- EP-A- 0 760 202

## Beschreibung

### Gebiet der Erfindung

Die Erfindung bezieht sich auf eine Anordnung zum Befüllen eines Behälters mit Schüttgut, umfassend eine Befülleinrichtung mit einer Ausflussöffnung für das Schüttgut und einen Behälter mit einer Einfüllöffnung, durch die hindurch das Schüttgut in den Behälter gelangt.

Die Erfindung ist vorteilhaft für Anwendungen im Zusammenhang mit landwirtschaftlichen Erntemaschinen, wie Mähdreschern und Feldhäckslern, und diesen Erntemaschinen zugeordneten Transportfahrzeugen zur Aufnahme und zum Abtransport des Erntegutes geeignet. Dabei insbesondere zur Steuerung einer automatisierten Befüllung des Ladebehälters am Transportfahrzeug. Die Anwendungen sind jedoch nicht hierauf beschränkt.

### Stand der Technik

Es ist beispielsweise bekannt, bei der Getreideernte das Korn zunächst in einen Tank zu füllen, der Teil der Erntemaschine, in diesem Fall des Mähdreschers, ist. Da dieser Tank jedoch nur eine begrenzte Speicherkapazität besitzt, ist dessen wiederholte Entleerung während des Ernteprozesses erforderlich. Die Entleerung erfolgt, indem das Getreide durch einen am Mähdrescher angeordneten Auswurfarm befördert und aus diesem heraus in einen von einer Zugmaschine parallel zur Fortbewegungsrichtung des Mähdreschers gezogenen Anhänger gefüllt wird.

Aus Gründen der Zeitersparnis erfolgt das Befüllen des Anhängers während des Erntevorgangs, d.h. sowohl der Mähdrescher als auch die Zugmaschine mit Anhänger bewegen sich über das Getreidefeld. Dabei muss das Befüllen des Anhängers entweder vom Fahrer der Zugmaschine oder vom Fahrer des Mähdreschers überwacht werden. Bei der Überwachung ist darauf zu achten, dass das Umfüllen vom Mähdrescher in den Anhänger möglichst verlustfrei geschieht, um Ertragseinbußen zu vermeiden, und dass die Ladekapazität des Anhängers optimal ausgenutzt wird, wobei die Ladung entsprechend der konstruktiv vorgegebenen Achslast zu verteilen ist und die zulässige Last aus Gründen der Effizienz nicht unterschritten werden soll, aber auch nicht überschritten werden darf.

Während des Umfüllens kann in der Regel von einem Mähdreschern aus weder die Höhenposition der Öffnung am Auswurfarm, aus der das Getreide in den Anhänger fließt, noch die Azimuteinstellung des Auswurfarmes, die die Position der Ausflussöffnung über dem Anhänger bestimmt, verändert werden, so dass es erforderlich ist, das Befüllen des Anhängers durch Steuerung der Zugmaschine so zu beeinflussen, dass sich die Ausflussöffnung stets in einer Position über dem Anhänger befindet, die zur optimalen Befüllung wünschenswert ist.

Ähnliche Probleme ergeben sich bei Ernteprozessen mit Feldhäckslern. Allerdings wird hier - im Gegensatz zur Getreideernte mit Mähdreschern - das Erntegut nicht erst in der Erntemaschine zwischengespeichert, sondern direkt über einen Auswurfarm in den Ladebehälter eines Transportfahrzeuges geleitet, wobei auch hier das Transportfahrzeug, etwa wiederum ein von einer Zugmaschine gezogener Anhänger, sich neben dem Feldhäcksler über das Feld bewegt. Außerdem kann hier der Auswurfarm in Bezug auf Höhe, Azimut und Wurfweite gesteuert werden.

Eine Anordnung zur automatischen Steuerung eines Auswurfarmes, der Teil einer landwirtschaftlichen Erntemaschine ist, ist beispielsweise in US 5,359,838 beschrieben. Hierbei wird mittels einer Koppeleinrichtung die Position eines Feldhäckslers relativ zu einem Anhänger und damit auch die Position des am Feldhäcksler angeordneten Auswurfarms relativ zur Ladefläche des Anhängers konstant gehalten. Nachteilig dabei ist, dass der Anhänger von dem Feldhäcksler gezogen werden muss und außerdem zunächst die Ankopplung eines unbeladenen Anhängers an den Feldhäcksler, dann nach dem Befüllen dessen Abkopplung und wiederum die Ankopplung eines noch unbeladenen Anhängers an den Feldhäcksler erforderlich ist, was unerwünschte Zeitverluste zur Folge hat.

Bei einer in DE 100 64 862 A1 beschriebenen Verfahrensweise werden Fahrtrichtung und Fahrgeschwindigkeit einer Erntemaschine und einer Zugmaschine mit Anhänger miteinander synchronisiert, indem mindestens eines der Fahrzeuge, entweder die Erntemaschine oder die den Anhänger ziehende Zugmaschine, mit einem Navigationssystem ausgestattet ist und ein Austausch von Positionsangaben zwischen den Fahrzeugen stattfindet. Zwar lassen sich auf diese Weise die Relativpositionen von Erntemaschine und Transportfahrzeug überwachen und im Zusammenhang damit auch eine Steuerung des Auswurfarmes vornehmen, jedoch ist eine automatische, von der subjektiven Einschätzung des Fahrers der Erntemaschine oder des Fahrers der Zugmaschine unabhängige Überwachung und Kontrolle der Befüllung des Anhängers auch hiermit nicht möglich.

In DE 3 112 826 A1 ist eine Anordnung beschrieben, bei der die Erntemaschine mit einem optischen System zur Erkennung von reflektierenden Markierungen ausgestattet ist, die am Anhänger angebracht sind. Anhand der Position der von dem optischen System erfassten Reflexionsmarken wird eine Steuerung des Auswurfarmes relativ zum Anhänger vorgenommen. Auch hiermit ist eine anhand der weiter oben beschriebenen Kriterien gemessene optimale Befüllung nicht erzielbar.

Weiterhin ist mit DE 196 47 522 A1 vorgeschlagen worden, eine mit einer optoelektronischen Kamera ausgestattete Einrichtung zur Überwachung der Befüllung zu nutzen. Nachteil dabei ist jedoch ebenfalls, dass die von der Kamera erfassten Informationen, die dem Fahrer der Erntemaschine und/oder dem Fahrer der Zugmaschine mittels eines Monitors in Form von Bildern der Ladefläche visuell zugänglich gemacht werden, keine automatische, von subjektiven Faktoren freie Steuerung des Auswurfarmes relativ zum Anhänger zulassen.

Die Verwendung einer Kamera ist ebenfalls bei der in DE 44 26 059 A1 beschriebenen Verfahrensweise vorgesehen. Hier ist die Kamera am Auswurfarm montiert und dient sowohl der Beobachtung der Ausflussöffnung des Auswurfarmes als auch der Ladefläche des zu befüllenden Anhängers, so dass sowohl die manuelle Ausrichtung der Erntemaschine relativ zu dem Anhänger anhand von Bilddaten möglich ist als auch die manuelle Überwachung der Befüllung. Eine automatisierte, optimale Befüllung ist allerdings auch hiermit nicht möglich.

Schließlich offenbart EP 0 760 202 A1 eine Vorrichtung mit zwei Abstandssensoren (akustisch oder optisch), wovon einer eine Füllstandshöhe ermittelt und der andere den seitlichen Abstand zwischen der Erntemaschine und dem Anhänger misst, was keine optimale Befüllung erlaubt..

### Beschreibung der Erfindung

Von diesem Stand der Technik ausgehend liegt der Erfindung die Aufgabe zugrunde, eine Anordnung der eingangs beschriebenen Art zu schaffen, mit der unter weitestgehendem Ausschluss subjektiver Einflüsse das optimale Befüllen eines Behälters mit Schüttgut erzielt wird und Verluste an Schüttgut vermieden werden.

Diese Aufgabe wird erfindungsgemäß gelöst mit einer Anordnung zum Befüllen eines Behälters mit Schüttgut der eingangs beschriebenen Art, ausgestattet
- mit einer Messeinrichtung
- zur wiederholten Erfassung von Bilddaten von der Oberfläche des Schüttgutes im Behälter während der Befüllung und
- zur wiederholten Bestimmung von Füllstandswerten h, die ein Äquivalent der Höhe des eingefüllten Schüttgutes in vorgegebenen Bereichen der Schüttgutoberfläche sind, sowie
- mit einer Signalverarbeitungseinrichtung zum Ermitteln eines dreidimensionalen Bildes mindestens von vorgegebenen Bereichen der Schüttgutoberfläche anhand der Bilddaten in Vorbindung mit dem Füllstandswerten und zum Generieren von Steuerbefehlen anhand der dreidimensionalen Bilddaten zur Positionierung von Ausflussöffnung und Einfüllöffnung relativ zueinander und/oder zur Beeinflussung der Menge des je Zeiteinheit aus der Ausflussöffnung fließenden Schüttgutes.

Im Vergleich zu den bisher bekannten Lösungen wird mit der erfindungsgemäßen Anordnung anhand der Bilddaten in Verbindung mit den Füllstandswerten h ein dreidimensionales Bild von der Schüttgutoberfläche, mindestens aber von ausgewählten und nach dieser Auswahl vorgegebenen Bereichen der Schüttgutoberfläche gewonnen. Anhand dieser dreidimensionalen Bilddaten wird die Befüllung unabhängig von subjektiven Einflüssen kontrolliert.

Zum Zweck der automatischen Optimierung der Befüllung werden in der Signalverarbeitungseinrichtung die Bilddaten und Füllstandswerte h miteinander verknüpft, aus der Verknüpfung Steuerbefehle generiert und diese zur Positionierung der Ausflussöffnung relativ zu der Einfüllöffnung, zur Positionierung der Einfüllöffnung relativ zur Ausflussöffnung und/oder zur Beeinflussung der Menge des je Zeiteinheit aus der Ausflussöffnung fließenden Schüttgutes genutzt.

Mit anderen Worten: Ergibt sich bei der Auswertung der Bilddaten und der Füllstandswerte h bzw. eines daraus gewonnenen dreidimensionalen Bildes der Schüttgutoberfläche, dass der Behälter nicht optimal befüllt ist, beispielsweise insofern, als die Schüttgutoberfläche aufgrund der Ausbildung von Schüttkegeln in unerwünschter Weise uneben ist, so werden Steuerbefehle generiert, die dafür sorgen, dass die Position der Ausflussöffnung relativ zu den Oberflächenbereichen verändert wird, bei denen das Schüttgut noch nicht die vorgesehene Höhe erreicht hat, um dort eine Auffüllung zu bewirken.

Zusätzlich oder alternativ dazu ist erfindungsgemäß die Verknüpfung der Bilddaten und Füllstandswerte h zum Generieren von Steuerbefehlen vorgesehen, die eine Erhöhung der Menge des ausfließenden Schüttgutes über den Oberflächenbereichen veranlassen, bei denen die zulässige Füllhöhe noch nicht erreicht ist.

Auf diese Weise lässt sich sowohl eine im Hinblick auf die in den Behälter eingefüllte Menge als auch im Hinblick auf die Zeitdauer optimierte Befüllung erreichen bei gleichzeitiger Vermeidung von Verlusten an Schüttgut wegen falscher Befüllung.

Zur Erfassung der Bilddaten können optional optische Einzelsensoren, optische Sensorzeilen und/oder optische Sensorarrays vorgesehen sein. Solche optischen Sensoren und ihre Verwendungsweise sind aus dem Stand der Technik hinreichend bekannt, so dass eine nähere Erläuterung an dieser Stelle nicht erforderlich ist.

Zur Bestimmung der Füllstandswerte h ist eine Entfernungsmesseinrichtung vorhanden, die in kurzen Zeitabständen wiederholt Abstände a zwischen einer Bezugsebene B oberhalb des zu befüllenden Behälters und den vorgegebenen Bereichen der Oberfläche des Schüttgutes ermittelt, und der eine Rechenschaltung zur Bestimmung der Füllstandswerte h aus den jeweils gemessenen Abständen a nachgeordnet ist.

Mit diesen Mitteln lässt sich fortlaufend die Füllhöhe, jeweils bezogen auf die vorgegebenen Oberflächenbereiche, bestimmen und während des Follprozesses überwachen.

In einer bevorzugten Ausgestaltung der erfindungsgemäßen Anordnung verfügt die Entfernungsmesseinrichtung über phasensensitive Sensoren, wobei besonderes bevorzugt ein oder mehrere Arrays aus phasensensitiven Sensoren vorhanden sind, mit denen nach dem an sich bekannten "time-of-flight"-Prinzip sowohl die erforderlichen Bilddaten erfasst als gleichzeitig auch die Abstände a ermittelt werden.

Phasensensitive Sensoren messen außer der Helligkeit auch die Laufzeit des Lichtes, das die Bildinformation trägt, und ermöglichen damit Messung von Entfernungen, im vorliegenden Fall also die Messung der Abstände a. Dies erfolgt unter Zuhilfenahme einer gesonderten, modulierten Lichtquelle zur Beleuchtung der Objekte, zu denen die Entfernung zu messen ist, hier also zur Beleuchtung der vorgegebenen Oberflächenbereiche des Schüttgutes.

Die Bezugsebene B ist vorteilhaft durch die Empfangsfläche der in die Messeinrichtung integrierten phasensensitiven Sensoren definiert. Die Messeinrichtung kann beispielsweise nahe der Ausflussöffnung angeordnet sein.

Zur Bewertung der während der Befüllung aktuell gemessenen Abstände a im Hinblick darauf, ob die maximal zulässigen Füllstandswerte h erreicht worden sind, ist mindestens eine Messmarke am Behälter vorhanden, wobei der Abstand zwischen der Bezugsebene B und der Messmarke einer Referenzhöhe r entspricht.

Als Messmarken kommen beispielsweise die Oberkanten der Bordwand eines das Schüttgut aufnehmenden Anhängers, Markierungen in Höhe des maximalen Füllstandes innerhalb oder außerhalb der Bordwand des Anhängers oder Markierungen außerhalb des Anhängers in Höhe des Behälterbodens bzw. der Ladefläche in Betracht.

Als relevante Oberflächenbereiche können Oberflächenbereiche vorgegeben sein, die in beliebigen, vorzugsweise jedoch in etwa gleichen geometrischen Abständen zueinander auf der Oberfläche des Schüttgutes verteilt sind.

In einer besonders bevorzugten Ausgestaltung der erfindungsgemäßen Anordnung sind dem Array aus phasensensitiven Sensoren Zylinderlinsen, Prismen oder Freiformflächen vorgeordnet, um eine ungleichmäßig verteilte optische Auflösung bei der Erfassung der Bild- und Entfernungsdaten zu bewirken. Dabei werden vorteilhaft von den vorgegebenen, zum Generieren der Steuerbefehle relevanten Oberflächenbereichen Bild- und Entfernungsdaten mit höherer Auflösung erfasst als von den übrigen, im Zusammenhang mit dem Erfindungsgedanken weniger interessanten Oberflächenbereichen.

In den häufigsten Anwendungsfällen ist die Einfüllöffnung des Behälters um ein Vielfaches größer als die an einem Auswurfarm ausgebildete Ausflussöffnung, wobei der Auswurfarm mit einem ansteuerbaren Antrieb gekoppelt ist. Hierbei steht erfindungsgemäß dieser Antrieb mit der Signalverarbeitungseinrichtung in Verbindung, so dass durch Ansteuerung dieses Antriebes mittels der in der Signalverarbeitungseinrichtung generierten Steuerbefehle die Position der Ausflussöffnung relativ zu der Einfüllöffnung veränderbar ist.

Optional kann vorgesehen sein, dass der Auswurfarm mit der Ausflussöffnung Teil einer mit einer Ansteuerschaltung zur Beeinflussung der Fördermenge ausgestatteten Beförderungseinrichtung für das Schüttgut ist, wobei die Ansteuerschaltung mit der Signalverarbeitungseinrichtung in Verbindung steht und diese Verbindung zur Übermittlung von Steuerbefehlen zur Beeinflussung der Menge des je Zeiteinheit aus der Ausflussöffnung fließenden Schüttgutes vorgesehen ist.

Dabei erfolgt die Beeinflussung der Menge des je Zeiteinheit aus der Ausflussöffnung ausfließenden Schüttgutes in Abhängigkeit von den Füllstandswerten h, sodass ein schnelles Auffüllen des Schüttgutes bei den Oberflächenbereichen erzielt wird, bei denen die gewünschte Füllhöhe noch nicht erreicht ist. Oder umgekehrt die Menge des ausfließenden Schüttgutes bezogen auf die Oberflächenbereiche verringert und schließlich auf Null gestellt wird, bei denen die gewünschte Füllhöhe bereits erreicht ist.

Besonders bevorzugt ist die erfindungsgemäße Anordnung im Zusammenhang mit landwirtschaftlichen Erntemaschinen anwendbar, beispielsweise für Feldhäcksler oder Mähdrescher, wobei der zu befüllende Behälter Teil eines Transportfahrzeuges ist, das zur Aufnahme und zum Abtransport des Erntegutes dient.

Bei der Anwendung mit einem Feldhäcksler werden die Steuerbefehle so generiert, dass damit die Ausflussöffnung stets in eine Position relativ zum Anhänger gestellt wird, von der aus das Auffüllen an den Oberflächenbereichen erfolgt, bei denen die gewünschte Füllhöhe noch nicht erreicht ist.

Beim Ernteprozess mit einem Mähdrescher, der über keinen schwenkbaren Auswurfarm verfügt, werden Steuerbefehle generiert, die an das Transportfahrzeug übertragen und zur Positionierung des Transportfahrzeuges relativ zur Ausflussöffnung genutzt werden, so dass auch hier die Ausflussöffnung stets in eine Position relativ zum Anhänger gestellt wird, von der aus das Auffüllen an den Oberflächenbereichen erfolgt, bei denen die gewünschte Füllhöhe noch nicht erreicht ist.

In den Fällen, in denen an der Auswurföffnung eine ansteuerbare Vorrichtung zur Beeinflussung der Wurfweite des Schüttgutes vorhanden ist, kann erfindungsgemäß auch das Generieren dazu geeigneter Steuerbefehle vorgesehen sein, um damit ebenfalls eine im Hinblick auf die Zeitdauer und die Vermeidung von Verlusten an Schüttgut optimierte Befüllung zu erreichen.

### Kurze Beschreibung der Zeichnungen

Die Erfindung soll nachfolgend anhand eines auf die Anwendung der erfindungsgemäßen Anordnung im Zusammenhang mit Erntemaschinen bezogenen Ausführungsbeispieles näher erläutert werden. In den zugehörigen Zeichnungen zeigen
- Fig.1: eine Prinzipdarstellung der erfindungsgemäßen Anordnung in einer Seitenansicht,
- Fig.2: die Prinzipdarstellung aus Fig.1 in einer Draufsicht,
- Fig.3: eine Einzelheit aus Fig.1.

### Ausführliche Beschreibung der Zeichnungen

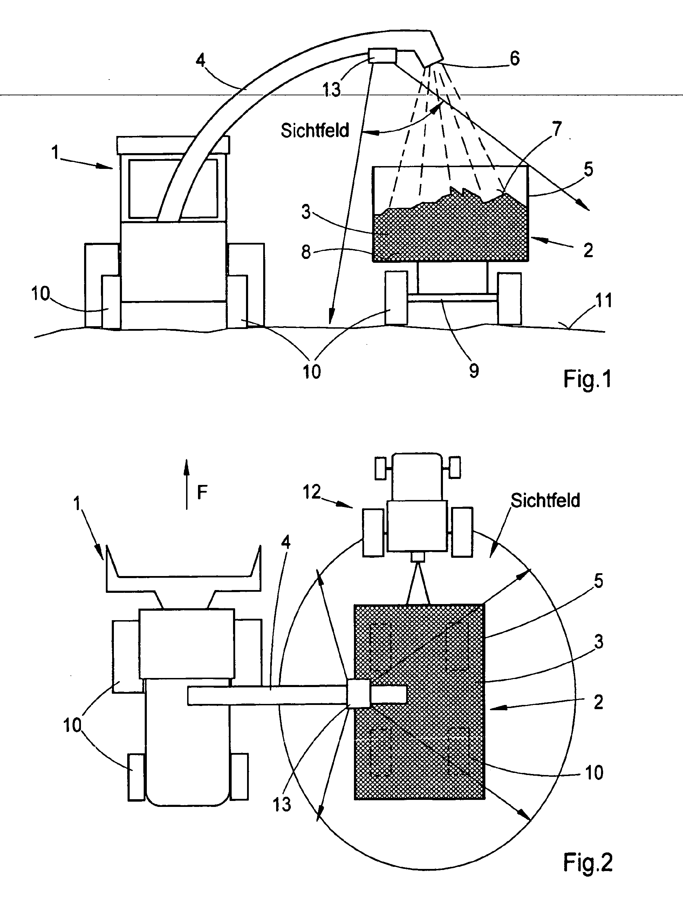

In Fig.1 sind im Prinzip dargestellt: Eine Erntemaschine 1, beispielsweise ein Feldhäcksler, und ein Anhänger 2, der zur Aufnahme und zum Abtransport des Erntegutes als Schüttgut 3 vorgesehen ist.

Das Schüttgut 3 gelangt während des Ernteprozesses über einen Auswurfarm 4 in den Behälter 5, d.h. in den Ladebehälter des Anhängers 2. Dabei fließt das Schüttgut 3 aus einer sich am Auswurfarm 4 befindlichen Ausflussöffnung 6 in den Behälter 5.

Beim Ernteprozess mit den Mitteln des Standes der Technik bildet das in den Behälter 5 gelangende Schüttgut 3 eine unebene Oberfläche 7 aus, wie beispielhaft in Fig.1 gezeigt. Die Unebenheit entsteht dabei sowohl aufgrund einer über die Oberfläche 7 verteilten ungleichmäßigen Befüllung aus als auch infolge der sich einstellenden Schüttkegel bzw. Schüttwinkel, die von den Eigenschaften des jeweiligen Schüttgut abhängig sind.

Daraus folgt, dass der Anhänger 2 insofern nicht optimal beladen ist, als sich bereichsweise eine zu hohe Fallhöhe einstellt, in anderen Bereichen dagegen die sich einstellende Füllhöhe im Hinblick auf die verfügbare Ladekapazität zu gering ist. Außerdem ist dabei die Verteilung der Last auf die Achse 9 ebenfalls mehr oder weniger dem Zufall überlassen.

Aus Fig.1 und Fig.2 ist ersichtlich, dass die Erntemaschine 1 und der Anhänger 2 über Räder 10 fahrbar gegen ein Erntefeld 11 abgestützt sind.

In Fig.2 ist die Anordnung nach Fig.1 in einer Draufsicht dargestellt. Zu erkennen ist hier, dass vor den Anhänger 2 eine Zugmaschine 12 gespannt ist, die dazu dient, den Anhänger 2 parallel zur Fortbewegungsrichtung F der Erntemaschine 1 zu bewegen.

Um nun das Befüllen des Anhängers 2 zu optimieren, ist, wie in Fig.1 und auch Fig.2 dargestellt, am Auswurfarm 4 eine Messeinrichtung 13 angeordnet. Die Messeinrichtung 13 besteht im Wesentlichen aus einer Laufzeitkamera, die mit einem Array aus phasensensitiven Sensoren ausgestattet ist, so dass damit wie bereits beschrieben sowohl Bild- als auch Entfernungsinformationen erfasst werden.

Des weiteren ist eine Signalverarbeitungseinrichtung vorhanden, die zeichnerisch nicht dargestellt ist, die jedoch innerhalb der Messeinrichtung 13 oder alternativ dazu in der Erntemaschine 1 untergebracht sein kann und die zur Generierung von Steuerbefehlen dient, die zur Positionierung der Ausflussöffnung 6 relativ zum Anhänger 2 vorgesehen sind.

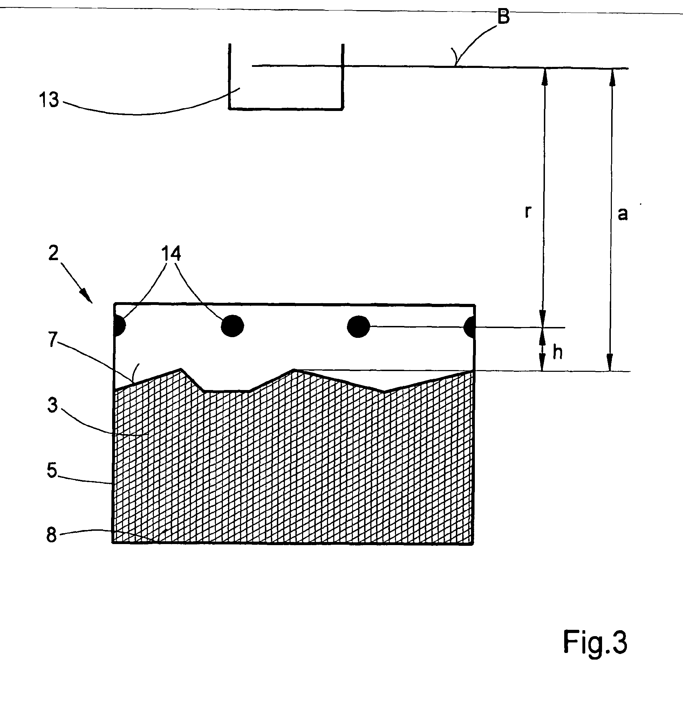

Das Generieren der Steuerbefehle erfolgt erstens auf der Grundlage der von den phasensensitiven Sensoren in vorgegebenen Zeittakten wiederholt erfassten Bilddaten von der Oberfläche 7 des Schüttgutes 3, und zweitens auf der Grundlage der in eben diesen Zeittakten wiederholten Bestimmung von Füllstandswerten h in Zuordnung zu vorgegebenen Oberflächenbereichen des Schüttgutes 3, wie weiter unten anhand Fig.3 näher erläutert wird.

Zunächst sei darauf hingewiesen, dass in dem für das Ausführungsbeispiel gewählten Fall der Anwendung der erfindungsgemäßen Anordnung im Zusammenhang mit einem Feldhäcksler der Auswurfarm 4 mit ansteuerbaren Antrieben (zeichnerisch nicht dargestellt) gekoppelt ist, die
- zur Beeinflussung der Position der Ausflussöffnung 6 über dem Anhänger 2 aufgrund einer Azimutdrehung,
- zur Beeinflussung der Höhe der Ausflussöffnung 6 über dem Anhänger 2 durch Anheben oder Absenken des Auswurfarmes 4, und/oder
- zur Beeinflussung der Wurfweite des Erntegutes
ausgebildet sind, wobei die Signalverarbeitungseinrichtung zwecks Übermittlung von Steuerbefehlen mit diesen Antrieben in Verbindung steht.

Des weiteren ist eine ebenfalls zeichnerisch nicht dargestellte Beförderungseinrichtung vorhanden, die das Schüttgut 3 durch den Auswurfarm 4 hindurch zur Ausflussöffnung 6 befördert, von wo das Schüttgut 3 in den Anhänger 2 gelangt.

In Fig.3 ist eine Bezugsebene B eingezeichnet. Es sei angenommen, dass die Empfangsflächen der phasensensitiven Sensoren in dieser Bezugsebene B liegen. Dies wird erreicht, indem die Messeinrichtung 13 in entsprechender Höhe am Auswurfarm 4 angeordnet ist oder, alternativ dazu, eine separate Halterung für die Messeinrichtung 13 vorhanden ist, mit der die Empfangsflächen der phasensensitiven Sensoren in der Bezugsebene B fixiert sind.

Die Bezugsebene B befindet sich in einer Referenzhöhe r über dem Anhänger 2. Die Referenzhöhe r ist durch den Abstand zwischen der Bezugsebene B und Messmarken 14 definiert.

Die Messmarken 14 sind an den Innenseiten der Bordwände des Anhängers 2 in einer vorgegebenen Entfernung von der oberen Bordwandkante angebracht. Es muss mindestens eine, können aber auch mehr Messmarken 14 vorhanden sein. Mit drei Messmarken 14 beispielsweise lässt sich eine in der optimalen Füllhöhe liegende Ebene definieren. Diese Füllhöhe ist für jeden der für den Ernteprozess verwendeten Anhänger 2 spezifische festzulegen.

Diese Art von Messmarken 14 und deren Positionierung ist hier lediglich beispielhaft angegeben. In vergleichbarer Weise können auch Markierungen in Höhe des maximalen Füllstandes auch außerhalb der Bordwand des Anhängers 2, die Oberkanten der Bordwand des Anhängers 2 oder Markierungen außerhalb des Anhängers 2 in Höhe des Behälterbodens als Messmarken dienen, wobei auch diese Aufzählung nicht vollständig ist.

Beim Betreiben der erfindungsgemäßen Anordnung werden von den phasensensitiven Sensoren in kurzen von einem Taktgeber vorgegebenen Zeitabständen neben der Gewinnung von Bildinformationen von der Oberfläche 7 auch die Abstände a zwischen der Bezugsebene B und der Oberfläche 7 und die Referenzhöhe r zwischen der Bezugsebene B und den Markierungen gemessen.

Hierzu ist das Array aus phasensensitiven Sensoren in der Messeinrichtung 13 so dimensioniert, dass sowohl die gesamte Ladefläche des Anhängers 2 und somit die gesamte Oberfläche 7 des Schüttgutes 3 als auch die Bordwände mit den Messmarken 14 bildlich erfasst werden.

Die Messergebnisse werden aufgrund der in den kurzen Zeitabständen wiederholten Messungen fortlaufend aktualisiert, und auf dieser Grundlage wird quasi mittels der Signalverarbeitungseinrichtung ein stets aktuelles dreidimensionales Bild von dem Raum vor der Messeinrichtung 13 erzeugt.

In die Signalverarbeitungseinrichtung ist eine Rechenschaltung integriert, die zur Bestimmung der Füllstandswerte h aus der Beziehung h = a - r ausgelegt ist. Damit liegen in der Signalverarbeitungseinrichtung kontinuierlich Füllstandswerte h vor, die verschiedenen Bereichen der Oberfläche 7 zugeordnet sind.

Auf diese Weise stehen die Bild- und Entfernungsinformationen zur Verfügung, die zum Generieren der gewünschten Steuerbefehle erforderlich sind. Die Steuerbefehlen bewirken die Ansteuerung der Antriebe so, dass die Füllstandswerte h im Verlaufe des Ernteprozesse immer kleiner werden, bis bei h = 0 für alle beobachteten Oberflächenbereiche die optimale Befüllung erreicht ist.

In einer weiterführenden Ausgestaltung wird mittels der Signalverarbeitungseinrichtung aus den über die Oberfläche 7 gewonnenen Informationen, beispielsweise durch zeitaufgelösten Bild-zu-Bild-Vergleich, die Änderung der Position des Anhängers 2 relativ zum Transportfahrzeug 1 erfasst und es werden daraus korrigierende Anweisungen für die Zugmaschine 12 bzw. den Fahrer der Zugmaschine 12 abgeleitet.

Damit ist es möglich, ohne Stillstand der Erntemaschine 1, im gewählten Ausführungsbeispiel des Feldhäckslers, einen leeren Anhänger an die Stelle eines soeben optimal beladenen Anhängers 2 zu positionieren. Erreicht wird dies, wenn die Messeinrichtung 13 so ausgelegt ist, dass nicht nur Bild- und Entfernungsinformationen von dem Anhänger 2 bzw. dessen Ladefläche erfasst werden, sondern darüber hinaus auch von mindestens einem weiteren, noch nicht befüllten Anhänger, der neben, vor oder hinter dem gerade befüllten Anhänger 2 gezogenen wird.

In diesem Fall sollte die Signalverarbeitungseinrichtung dazu ausgelegt sein, Steuerbefehle und/oder Anweisungen für den Fahrer der Zugmaschine 12 zu generieren, an die der weitere Anhänger gekoppelt ist. So kann das Auswechseln des Anhängers 2 in Verbindung mit der Positionierung der Ausflussöffnung 6 während des Auswechselns bei weitestgehend minimierten Verlusten an Erntegut erfolgen.

Die erfindungsgemäße Anordnung wurde bisher am Beispiel der Anwendung im Zusammenhang mit einem Feldhäcksler erläutert. Wie weiter oben bereits dargelegt, bestehen Besonderheiten bei Anwendung mit Mähdreschern darin, dass hierbei während des Umfüllens weder die Höhenposition der Ausflussöffnung 6 am Auswurfarm 4, aus der das Getreide in den Anhänger 2 fließt, noch die Azimuteinstellung des Auswurfarmes 4, die die Position der Ausflussöffnung 6 relativ zum Anhänger 2 bestimmt, verändert werden kann.

In diesem Fall kann vorgesehen sein, aus den ermittelten Bild- und Entfernungsinformationen korrigierende Steuerbefehle für die Lenkeinrichtung und die Beschleunigungs- und Bremseinrichtung der Zugmaschine 12 abzuleiten, diese an die Zugmaschine 12 zu übermitteln und die Fortbewegungsrichtung und die Fortbewegungsgeschwindigkeit der Zugmaschine 12 so zu beeinflussen, dass sich die Ausflussöffnung 6 stets in einer Position über dem Anhänger 2 befindet, die zur optimalen Befüllung wünschenswert ist.

In einer weiterführenden Ausgestaltung der Erfindung kann beispielsweise eine Volumenbestimmung des eingebrachten Erntegutes vorgesehen sein, wobei diese wesentlich genauer ist als nur die Bestimmung der Anzahl an Anhängerladungen. Dazu ist lediglich die Signalverarbeitungseinrichtung zusätzlich so auszubilden, dass aus den ermittelten Bild- und Entfernungsinformationen das Maß des Raumes bestimmt wird, das in dem jeweiligen Anhänger 2 der Befüllung vorbehalten ist. Da die Anhänger 2 bei Anwendung der erfindungsgemäßen Anordnung stets optimal befüllt werden, ergibt die Summe dieser Räume das Volumen des eingebrachten Erntegutes mit hoher Genauigkeit.

Nimmt man ergänzend dazu noch eine mittlere, für das jeweilige Schüttgut spezifische Dichte an, so lässt sich aus seinem wie vorstehend bestimmten Volumen auch seine Masse ermitteln.

### Bezugszeichenllste

- 1: Erntemaschine
- 2: Anhänger
- 3: Schüttgut
- 4: Auswurfarm
- 5: Behälter
- 6: Ausflussöffnung
- 7: Oberfläche
- 8: Behälter oben
- 9: Achse
- 10: Räder
- 11: Erntefeld
- 12: Zugmaschine
- 13: Messeinrichtung
- 14: Messmarken

- B: Bezugsebene
- r: Referenzhöhe
- a: Abstand
- h: Füllstandswert
- F: Fortbewegungsrichtung

## Patentansprüche

1. Anordnung zum Befüllen eines Behälters mit Schüttgut, umfassend:
- eine Befülleinrichtung mit einer Ausflussöffnung für das Schüttgut, und
- einen Behälter mit einer Einfüllöffnung, durch die das Schüttgut in den Behälter gelangt,
**gekennzeichnet durch**
- eine Messeinrichtung (13)
- zur wiederholten Erfassung von Bilddaten von der Oberfläche (7) des Schüttgutes (3) im Behälter (5) während der Befüllung, und
- zur wiederholten Bestimmung von Füllstandswerten h, die ein Äquivalent der Höhe des eingefüllten Schüttgutes in vorgegebenen Bereichen der Schüttgutoberfläche sind, sowie
- eine Signalverarbeitungseinrichtung
- zum Ermitteln eines dreidimensionalen Bildes mindestens von vorgegebenen Bereichen der Schüttgutoberfläche anhand der Bilddaten in Verbindung mit den Füllstandswerten h und
- zum Generieren von Steuerbefehlen anhand der dreidimensionalen Bilddaten
- zur Positionierung von Ausflussöffnung (6) und Einfüllöffnung relativ zueinander und/oder
- zur Beeinflussung der Menge des je Zeiteinheit aus der Ausflussöffnung (6) ausfließenden Schüttgutes (3).

2. Anordnung nach Anspruch 1, bei der zur Erfassung der Bilddaten optische Einzelsensoren, optische Sensorzeilen und/oder optische Sensorarrays vorgesehen sind.

3. Anordnung nach Anspruch 1 oder 2, bei der zur Bestimmung der Füllstandswerte h eine Entfernungsmesseinrichtung vorhanden ist, die in kurzen Zeitabständen wiederholt Abstände a zwischen einer Bezugsebene B und den vorgegebenen Bereichen der Oberfläche (7) des Schüttgutes (3) ermittelt, und der Entfernungsmesseinrichtung eine Rechenschaltung zur Bestimmung der Füllstandswerte h aus den jeweils gemessenen Abständen a nachgeordnet ist.

4. Anordnung nach Anspruch 3, bei der zur Entfernungsmessung phasensensitive Sensoren vorgesehen sind oder
zur Erfassung der Bilddaten und zur gleichzeitigen Ermittlung der Abstände a ein Array aus phasensensitiven Sensoren vorgesehen ist.

5. Anordnung nach Anspruch 4, bei der die Bezugsebene B durch die Position der Empfangsfläche der phasensensitiven Sensoren definiert ist.

6. Anordnung nach Anspruch 5, bei der die phasensensitiven Sensoren in die Messeinrichtung (13) integriert sind, insbesondere
mit an der Ausflussöffnung (6) befestigter Messeinrichtung (13).

7. Anordnung nach einem der Ansprüche 4 bis 6, bei welcher dem Array aus phasensensitiven Sensoren Zylinderlinsen, Prismen oder Freiformflächen vorgeordnet sind, um eine ungleichmäßig verteilte optische Auflösung bei der Erfassung der Bilddaten zu bewirken, wobei die Erfassung der Bilddaten von den vorgegebenen Oberflächenbereichen mit höherer Auflösung vorgesehen ist als die Erfassung der Bilddaten von den übrigen Oberflächenbereichen.

8. Anordnung nach einem der vorgenannten Ansprüche, bei welcher
- die Einfüllöffnung um ein Vielfaches größer ist als die Ausflussöffnung (6),
- die Ausflussöffnung (6) mit einem ansteuerbaren Antrieb zur Änderung ihrer Position über der Einfüllöffnung gekoppelt ist, und
- die Signalverarbeitungseinrichtung zwecks Übermittlung von Steuerbefehlen zur Positionierung der Ausflussöffnung (6) relativ zu der Einfüllöffnung mit dem Antrieb in Verbindung steht.

9. Anordnung nach Anspruch 8, bei welcher die Positionierung der Ausflussöffnung (6) in Abhängigkeit von den Füllstandswerten h erfolgt.

10. Anordnung nach einem der vorgenannten Ansprüche, bei welcher
- die Ausflussöffnung (6) Teil einer Beförderungseinrichtung für das Schüttgut (3) ist,
- die Beförderungseinrichtung mit einer Ansteuerschaltung zur Beeinflussung der Fördermenge ausgestattet ist, und
- die Signalverarbeitungseinrichtung zwecks Übermittlung von Steuerbefehlen zur Beeinflussung der Menge des je Zeiteinheit aus der Ausflussöffnung fließenden Schüttgutes (3) mit der Ansteuerschaltung in Verbindung steht.

11. Anordnung nach Anspruch 10, bei welcher die Beeinflussung der Menge des je Zeiteinheit aus der Ausflussöffnung (6) fließenden Schüttgutes (3) in Abhängigkeit von den Füllstandswerten h vorgesehen ist.

12. Anordnung nach einem der Ansprüche 3 bis 11, bei Oberflächenbereiche zur Beobachtung vorgegeben sind, die mit etwa gleichen geometrischen Abständen voneinander über die gesamte Oberfläche (7) des Schüttgutes (3) verteilt sind.

13. Anordnung nach einem der vorgenannten Ansprüche, bei der die Ausflussöffnung (6) Teil einer landwirtschaftlichen Erntemaschine (1) ist, insbesondere eines Mähdreschers oder Feldhäckslers, und der Behälter (5) Teil eines Transportfahrzeuges zur Aufnahme und zum Abtransport des Erntegutes als Schüttgut (3) ist.

14. Anordnung nach einem der vorgenannten Ansprüche, bei der die Signalverarbeitungseinrichtung eine Rechenschaltung aufweist zur Bestimmung des Raummaßes, das in dem Anhänger (2) der Befüllung an Schüttgut vorbehalten ist, und damit zur Bestimmung des bei optimaler Befüllung in den Anhänger (2) eingebrachten Volumens an Schüttgut.

15. Anordnung nach Anspruch 14, bei der die Signalverarbeitungseinrichtung eine Rechenschaltung aufweist zur Bestimmung der Masse des in den Anhänger (2) eingebrachten Schüttgutes aus dem Volumen und einer für das betreffende Schüttgut vorgegebenen spezifischen Dichte.

## Claims

1. Arrangement for filling a container with bulk material, comprising:
- a filling device having an outflow opening for the bulk material, and
- a container having a filling opening, through which the bulk material passes into the container, **characterized by**
- a measuring device (13)
- for the repeated detection of image data from the surface (7) of the bulk material (3) in the container (5) during filling, and
- for the repeated determining of filling-level values h which are an equivalent of the height of the introduced bulk material in predefined regions of the bulk-material surface, and
- a signal processing device
- for determining a three-dimensional image at least of predefined regions of the bulk-material surface using the image data in conjunction with the filling-level values h, and
- for generating control commands using the three-dimensional image data
- for positioning the outflow opening (6) and filling opening relative to one another, and/or
- for influencing the quantity of bulk material (3) which flows out of the outflow opening (6) per unit time.

2. Arrangement according to Claim 1, in which optical individual sensors, optical sensor lines and/or optical sensor arrays are provided for detecting the image data.

3. Arrangement according to Claim 1 or 2, in which, in order to determine the filling-level values h, there is a distance-measuring device which repeatedly determines spacings a, at short time intervals, between a reference plane B and the predefined regions of the surface (7) of the bulk material (3), and a computing circuit for determining the filling-level values h from the respectively measured spacings a is arranged behind the distance-measuring device.

4. Arrangement according to Claim 3, in which phase-sensitive sensors are provided for distance measurement or an array of phase-sensitive sensors is provided for detecting the image data and for the simultaneous determination of the spacings a.

5. Arrangement according to Claim 4, in which the reference plane B is defined by the position of the receiving area of the phase-sensitive sensors.

6. Arrangement according to Claim 5, in which the phase-sensitive sensors are integrated into the measuring device (13), in particular with a measuring device (13) which is fastened to the outflow opening (6).

7. Arrangement according to one of Claims 4 to 6, in which cylindrical lenses, prisms or free-form surfaces are arranged in front of the array of phase-sensitive sensors, in order to bring about a non-uniformly distributed optical resolution during the detection of the image data, the detection of the image data from the predefined surface regions being provided with a higher resolution than the detection of the image data from the remaining surface regions.

8. Arrangement according to one of the preceding claims, in which
- the filling opening is multiple times larger than the outflow opening (6),
- the outflow opening (6) is coupled to an actuable drive for changing its position above the filling opening, and
- the signal processing device is connected to the drive for the purpose of transmitting control commands for positioning the outflow opening (6) relative to the filling opening.

9. Arrangement according to Claim 8, in which the positioning of the outflow opening (6) takes place as a function of the filling-level values h.

10. Arrangement according to one of the preceding claims, in which
- the outflow opening (6) is part of a conveying device for the bulk material (3),
- the conveying device is equipped with an actuating circuit for influencing the delivery quantity, and
- the signal processing device is connected to the actuating circuit for the purpose of transmitting control commands for influencing the quantity of bulk material (3) which flows out of the outflow opening per unit time.

11. Arrangement according to Claim 10, in which the influencing of the quantity of bulk material (3) which flows out of the outflow opening (6) per unit time is provided as a function of the filling-level values h.

12. Arrangement according to one of Claims 3 to 11, in which surface regions are predefined for observation which are distributed over the entire surface (7) of the bulk material (3) at approximately identical geometrical spacings from one another.

13. Arrangement according to one of the preceding claims, in which the outflow opening (6) is part of an agricultural harvesting machine (1), in particular of a combine harvester or field chopper, and the container (5) is part of a transport vehicle for receiving and for transporting away the harvested material as bulk material (3).

14. Arrangement according to one of the preceding claims, in which the signal processing device has a computing circuit for determining the amount of space which is reserved in the trailer (2) for filling with bulk material, and therefore for determining the volume of bulk material which is introduced into the trailer (2) in the case of optimum filling.

15. Arrangement according to Claim 14, in which the signal processing device has a computing circuit for determining the mass of the bulk material which is introduced into the trailer (2) from the volume and a specific density which is predefined for the relevant bulk material.

## Revendications

1. Arrangement pour remplir un récipient d'un produit en vrac, comprenait
- un dispositif de remplissage muni d'une ouverture d'écoulement pour le produit en vrac, et
- un récipient muni d'une ouverture de remplissage à travers laquelle le produit en vrac entre dans le récipient, **caractérisé par**
- un dispositif de mesure (13)
- pour l'acquisition répétée de données d'image de la surface (7) du produit en vrac (3) dans le récipient (5) pendant le remplissage et
- pour la détermination répétée de valeurs de niveau de remplissage h, lesquelles sont un équivalent de la hauteur du produit en vrac déversé dans des zones prédéfinies de la surface du produit en vrac, ainsi que
- un dispositif de traitement de signal
- pour déterminer une image tridimensionnelle d'au moins certaines zones prédéfinies de la surface du produit en vrac au moyen des données d'image en relation avec les valeurs du niveau de remplissage h et
- pour générer des instructions de commande au moyen des données d'image tridimensionnelle
- en vue de positionner l'ouverture d'écoulement (6) et l'ouverture de remplissage l'une par rapport à l'autre et/ou
- en vue d'influencer la quantité de produit en vrac (3) qui s'écoule hors de l'ouverture d'écoulement (6) par unité de temps.

2. Arrangement selon la revendication 1, dans lequel il existe des capteurs optiques individuels, des rangées de capteurs optiques et/ou des réseaux de capteurs optiques pour l'acquisition des données d'image.

3. Arrangement selon la revendication 1 ou 2, dans lequel il existe un dispositif de mesure de distance pour déterminer les valeurs de niveau de remplissage h, lequel détermine de manière répétée à de brefs intervalles de temps les écarts a entre un plan de référence B et les zones prédéfinies de la surface (7) du produit en vrac (3) et un circuit de calcul destiné à déterminer les valeurs de niveau de remplissage h à partir des écarts a respectivement mesurés est disposé à la suite du dispositif de mesure de distance.

4. Arrangement selon la revendication 3, dans lequel il existe des capteurs à sensibilité de phase pour la mesure de distance ou il existe un réseau de capteurs à sensibilité de phase pour acquérir les données d'image et pour déterminer simultanément les écarts a.

5. Arrangement selon la revendication 4, dans lequel le plan de référence B est défini par la position de la surface de réception des capteurs à sensibilité de phase.

6. Arrangement selon la revendication 5, dans lequel les capteurs à sensibilité de phase sont intégrés dans le dispositif de mesure (13), notamment avec le dispositif de mesure (13) fixé à l'ouverture d'écoulement (6).

7. Arrangement selon l'une des revendications 4 à 6, dans lequel le réseau de capteurs à sensibilité de phase est précédé par des lentilles cylindriques, des prismes ou des surfaces à forme libre afin d'effectuer une résolution optique à distribution irrégulière lors de l'acquisition des données d'image, l'acquisition des données d'image des zones prédéfinies de la surface étant prévue avec une résolution plus élevée que l'acquisition des données d'image des autres zones de la surface.

8. Arrangement selon l'une des revendications précédentes, dans lequel
- la taille de l'ouverture de remplissage est un multiple de celle de l'ouverture d'écoulement (6),
- l'ouverture d'écoulement (6) est couplée à un mécanisme d'entraînement commandable pour modifier sa position au-dessus de l'ouverture de remplissage, et
- le dispositif de traitement de signal est en liaison avec le mécanisme d'entraînement en vue de transmettre des instructions de commande destinées au positionnement de l'ouverture d'écoulement (6) par rapport à l'ouverture de remplissage.

9. Arrangement selon la revendication 8, dans lequel le positionnement de l'ouverture d'écoulement (6) s'effectue en fonction des valeurs du niveau de remplissage h.

10. Arrangement selon l'une des revendications précédentes, dans lequel
- l'ouverture d'écoulement (6) fait partie d'un dispositif de transport du produit en vrac (3),
- le dispositif de transport est équipé d'un circuit de commande pour influencer la quantité transportée, et
- le dispositif de traitement de signal est en liaison avec le circuit de commande en vue de transmettre des instructions de commande destinées à influencer la quantité de produit en vrac (3) qui s'écoule de l'ouverture d'écoulement par unité de temps.

11. Arrangement selon la revendication 10, dans lequel l'influence de la quantité de produit en vrac (3) qui s'écoule de l'ouverture d'écoulement (6) par unité de temps est prévue en fonction des valeurs de niveau de remplissage h.

12. Arrangement selon l'une des revendications 3 à 11, dans lequel des zones de la surface sont prédéfinies pour être observées, lesquelles sont distribuées avec approximativement les mêmes écarts géométriques entre elles sur toute la surface (7) du produit en vrac (3).

13. Arrangement selon l'une des revendications précédentes, dans lequel l'ouverture d'écoulement (6) fait partie d'une moissonneuse agricole (1), notamment d'une moissonneuse-batteuse ou d'une ramasseuse-hacheuse, et le récipient (5) fait partie d'un véhicule de transport destiné à recueillir et à évacuer le produit moissonné sous forme de produit en vrac (3).

14. Arrangement selon l'une des revendications précédentes, dans lequel le dispositif de traitement de signal présente un circuit de calcul destiné à déterminer le volume réservé dans la remorque (2) au remplissage avec le produit en vrac et ainsi à déterminer le volume de produit en vrac amené dans la remorque (2) dans le cas d'un remplissage optimal.

15. Arrangement selon la revendication 14, dans lequel le dispositif de traitement de signal présente un circuit de calcul destiné à déterminer la masse du produit en vrac amené dans la remorque (2) à partir du volume et d'une densité spécifique prédéfinie pour le produit en vrac concerné.
